# FASCICULE DE BREVET EUROPEEN

(11) **EP 4 035 522 B1**
(45) Date de publication et mention de la délivrance du brevet: **02.10.2024**
(21) Numéro de dépôt: 22153556.0
(22) Date de dépôt: 27.01.2022
(51) Int. Cl.: A01D 57/20

(54) **MACHINE DE FENAISON COMPORTANT UN DISPOSITIF DE DÉPLACEMENT TRANSVERSAL DE RÉCOLTE**
HEUWERBUNGSMASCHINE MIT EINER VORRICHTUNG ZUM QUERVERSCHIEBEN DES ERNTEGUTS
HAYMAKING MACHINE WITH A CROP TRANSVERSE DISPLACING DEVICE

(30) Priorité: 27.01.2021 FR 2100758
(43) Date de publication de la demande: 03.08.2022
(73) Titulaire: Kuhn SAS, 67700 Saverne (FR)
(72) Inventeur: GANTZER, Christian, 57915 WOUSTVILLER (FR)
(74) Mandataire: Hager, Esther Evelyne

(56) Documents cités:
- EP-A1- 3 666 058
- US-A- 5 272 860
- US-A1- 2015 020 492

## Description

L'invention concerne le domaine du machinisme agricole et porte sur une machine agricole de fenaison, et plus particulièrement sur une machine équipée d'au moins deux convoyeurs de déplacement transversal d'une récolte.

Plus particulièrement, l'invention vise une machine agricole de fenaison du type comprenant un châssis portant au moins un dispositif de déplacement transversal d'une récolte, telle que de l'herbe fauchée par exemple. Chaque dispositif de déplacement comporte au moins deux convoyeurs à bande sans fin circulant sur au moins deux rouleaux montés dans un cadre. Ces convoyeurs sont mobiles par rapport au châssis et peuvent occuper une position adjacente, dans laquelle un convoyeur dit convoyeur amont peut, lors de l'utilisation de la machine, transmettre la récolte au ou à un deuxième convoyeur dit convoyeur aval, les extrémités latérales internes ou rouleaux internes des deux convoyeurs concernés étant alors séparées par une distance d'écartement déterminée, que l'on souhaite garder minimale en position adjacente.

Afin de pouvoir s'adapter aux irrégularités du sol, chaque convoyeur peut se déplacer par rapport au châssis de la machine. Les rouleaux internes des deux convoyeurs considérés qui sont proches l'un de l'autre en position adjacente, peuvent ainsi être décalés verticalement l'un par rapport à l'autre. En position adjacente, un écart est laissé entre les deux convoyeurs afin d'éviter qu'ils ne s'entrechoquent. La distance d'écartement désigne cet écart laissé volontairement. Un inconvénient majeur de cette distance d'écartement, même lorsqu'elle est minimum, réside dans le fait qu'il induit des pertes de récolte entre les deux convoyeurs concernés.

La présente invention ont ainsi pour but général de limiter les pertes induites par cette distance d'écartement entre deux convoyeurs adjacents.

Par le document EP 3 666 058, on connait une machine du type précité comportant un élément dynamique de transfert de la récolte entre les deux convoyeurs, sous la forme d'un rouleau rotatif. Cette construction est complexe, lourde, encombrante et coûteuse. De plus, comme elle met en oeuvre un organe mobile, elle est sujette à usure et nécessite un entrainement. En outre, les nombreuses accélérations et décélérations de la récolte lors du passage d'un convoyeur à l'autre, notamment dans le cas de vitesses de rotation différentes entre convoyeurs et le rouleau rotatif, impliquent des perturbations du flux pouvant entrainer un andain et un séchage irréguliers, résultant en une qualité moindre de fourrage. De plus, de tels différences de vitesse de rotation peuvent également impliquer des turbulences favorisant la perte de fourrage vers l'arrière. Enfin, un autre inconvénient de la machine du document EP 3 666 058 est que l'élément dynamique de transfert de récolte occupe une place importante entre les rouleaux internes des convoyeurs, de sorte que s'il lui était possible d'éloigner les convoyeurs l'un de l'autre, l'andain obtenu serait plus petit ou moins large, à moins de déplacer davantage les convoyeurs pour obtenir un andain de la largeur souhaitée.

La présente invention a aussi pour but de fournir une solution alternative, palliant les inconvénients de cette solution connue.

A cet effet, l'invention a pour objet une machine agricole de fenaison telle qu'évoquée ci-dessus et caractérisée en ce qu'elle comporte en outre au moins un élément de support fournissant une surface de dépôt, et en ce que cette surface de dépôt présente une largeur inférieure à la distance d'écartement et est située entre les extrémités latérales internes des convoyeurs amont et aval considérés, au moins lorsque ces derniers sont en position adjacente.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1A] représente en vue de dessus simplifiée une machine de fenaison du type évoqué en introduction, avec un dispositif de déplacement transversal de la récolte comportant deux convoyeurs à bande sans fin, associés chacun à un dispositif de ramassage frontal ;
[Fig. 1B] représente une vue partielle en coupe, selon un plan perpendiculaire aux plans des bandes sans fin des convoyeurs, de la machine représentée figure 1A, un élément de support selon l'invention étant présent entre les deux convoyeurs ;
[Fig. 1C] représente l'objet de la figure 1B en vue de dessous ;
[Fig. 2] est une vue partielle en perspective et à une autre échelle de la machine représentée figure 1A, représentant l'extrémité latérale interne d'un convoyeur faisant partie de cette machine et montrant la fixation d'un élément de support selon l'invention pour la position adjacente ;
[Fig. 3] est une vue en perspective à une autre échelle de l'élément de support représenté figure 2, et
[Fig. 4A],
[Fig. 4B],

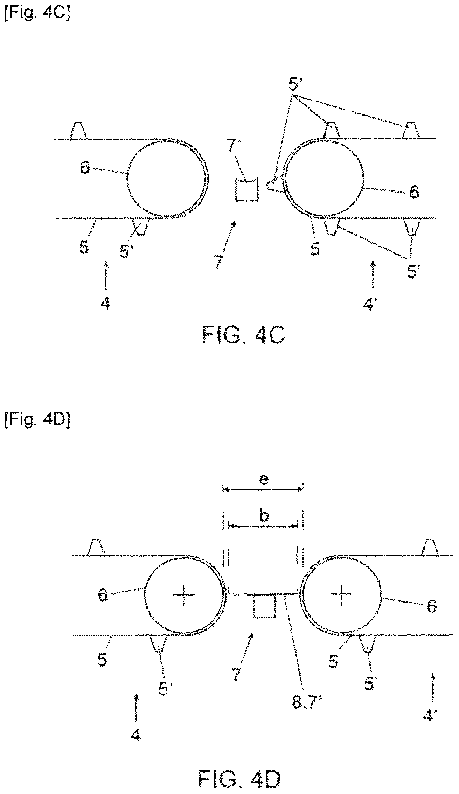

[Fig. 4C] et

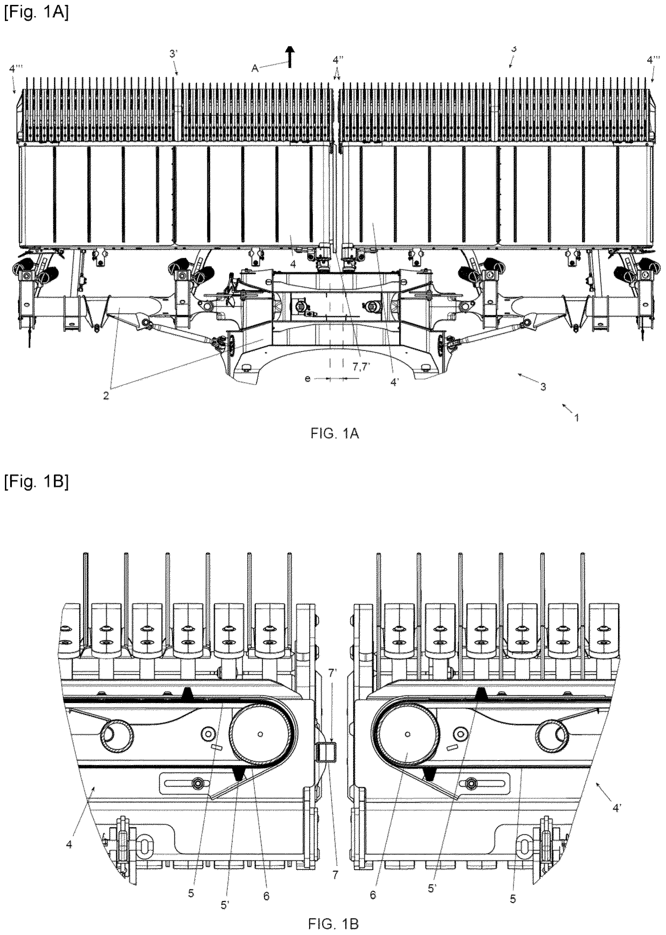

[Fig. 4D] sont des vues schématiques partielles en coupe, similaires à celle de la figure 1B, mais simplifiées, illustrant différentes variantes de réalisation constructives de l'invention.

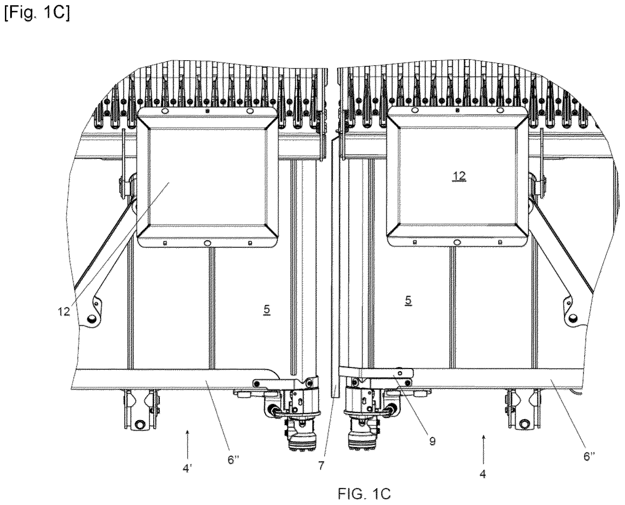

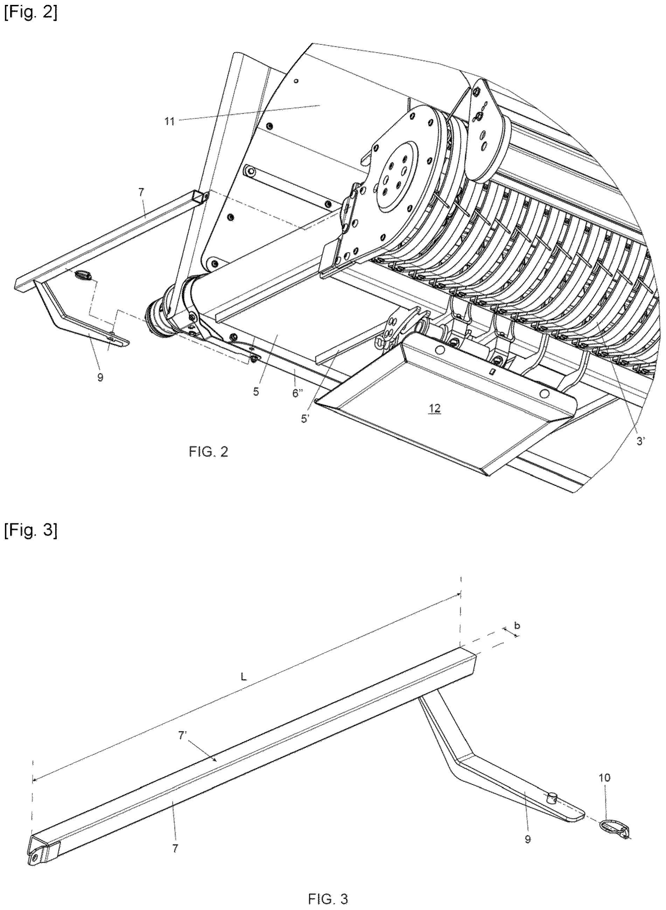

La figure 1A et partiellement les figures 1B, 1C et 2 illustrent une machine (1) agricole de fenaison comprenant un châssis (2) portant au moins un dispositif (3) de déplacement transversal d'une récolte (R), telle que de l'herbe fauchée par exemple. Chaque dispositif (3) comporte au moins deux convoyeurs (4, 4') à bande sans fin (5). Chaque bande sans fin (5) circule sur au moins deux rouleaux (6, 6') montés dans un cadre (6"). Les rouleaux (6) en regard et définissant entre eux la distance d'écartement (e) sont appelés rouleaux internes. Les rouleaux (6') opposés à ces derniers dans chaque convoyeur (4, 4') sont appelés rouleaux externes (6'). Ces convoyeurs (4, 4') sont mobiles par rapport au châssis (2). Chaque convoyeur (4, 4') s'étend entre une extrémité latérale interne (4") et une extrémité latérale externe (4‴). Chaque bande sans fin (5) est tendue par les rouleaux interne (6) et externe (6') respectifs. Au moins un des rouleaux (6, 6') permet d'entrainer en rotation la bande sans fin (5) associée.

Les convoyeurs (4, 4') peuvent occuper une position adjacente, dans laquelle un convoyeur (4) amont peut, lors de l'utilisation de la machine (1), transmettre la récolte (R) au ou à un convoyeur (4') aval. La récolte (R) est alors déposée au sol par le convoyeur (4') aval. La récolte (R) est donc déposée au sol à l'extrémité latérale externe (4‴) du convoyeur (4') aval, en position adjacente. La récolte (R) déposée au sol forme un andain. Grâce à l'avance de la machine (1), l'andain est longitudinal à la direction d'avance (A). Les rouleaux (6) internes des deux convoyeurs (4, 4') considérés (à savoir le convoyeur (4') aval et le convoyeur (4) amont considérés) sont proches l'un de l'autre en position adjacente. Autrement dit, le rouleau (6) interne est situé du côté de l'extrémité latérale interne (4") du convoyeur (4, 4') considéré. Chaque rouleau externe (6') est à l'extrémité latérale externe (4‴) du convoyeur (4, 4') considéré. Les extrémités latérales internes (4") des deux convoyeurs (4, 4') considérés sont en regard. Les rouleaux (6) internes des deux convoyeurs (4, 4') concernés sont séparés par une distance d'écartement (e). Autrement dit, la distance d'écartement (e) est la distance entre le rouleau (6) interne du convoyeur amont (4) et le rouleau (6) interne du convoyeur aval (4'). La distance d'écartement (e) est minimale dans la position adjacente. Comme le montrent également la figure 1A, chaque convoyeur (4, 4') est précédé dans la direction d'avance (A) lors de l'utilisation par une unité (3') de ramassage prélevant la récolte (R) au sol et l'amenant sur le convoyeur (4, 4') qui lui est associé. Alternativement ou additionnellement, chaque convoyeur (4, 4') pourrait être précédé d'un dispositif de coupe de la récolte (R) sur pied. De plus, chaque convoyeur (4, 4') peut être recouvert par une tôle de protection supérieure (11).

Conformément à l'invention, ladite machine (1) est caractérisée, comme le montrent plus particulièrement les figures 1B, 2 et 3, en ce qu'elle comporte en outre au moins un élément de support (7) fournissant une surface de dépôt (7'), et en ce que cette surface de dépôt (7') présente une largeur (b) inférieure à la distance d'écartement (e) et est située entre les extrémités latérales internes (4") des convoyeurs amont (4) et aval (4') considérés, lorsque ces derniers sont en position adjacente.

Grâce à ces dispositions, le but général est atteint et ce par le biais d'une solution simple, peu coûteuse, à faible encombrement, légère, qui ne présente pas de surface mouvante, ni de pièce en mouvement (pièce statique), et donc ne nécessite pas d'entrainement. Il en résulte une plus grande résistance à l'usure, moins de maintenance, moins de risque que la récolte ne soit emportée par le vent et pas non plus de risque d'interférence avec les bandes sans fin (5) des convoyeurs (4, 4'). La simplicité de cette solution implique également une utilisation plus économe du fait qu'elle ne nécessite aucun apport d'énergie ni d'entretien (lubrification...).

Il est entendu que la surface de dépôt (7') permet le dépôt de la récolte (R) ou plutôt d'une partie de la récolte (R) en position adjacente. De manière simple, la surface de dépôt (7') est la surface supérieure de l'élément de support (7). Le fait qu'en position adjacente, la surface de dépôt (7') est sensiblement fixe par rapport au châssis (2) ou à l'un des convoyeurs (4, 4') signifie qu'elle est statique par rapport à ceux-ci.

Bien entendu, la surface (7') peut être composite et être la résultante de la coopération de plusieurs éléments (7), néanmoins la mise en oeuvre d'un unique élément (7) est préférée.

Avantageusement, l'élément de support (7) est solidarisé avec le cadre (6") d'un des convoyeurs (4, 4'), permettant au support (7) de suivre les irrégularités du sol avec le convoyeur (4, 4') auquel il est solidarisé. De préférence, l'élément de support (7) est solidarisé avec le cadre (6") du convoyeur amont (4). En outre, la surface de dépôt (7') est située entre le haut et le bas du rouleau (6) interne du convoyeur (4, 4') auquel ledit élément de support (7) est solidarisé, au moins dans la position adjacente. La surface de dépôt (7') est ainsi statique par rapport au cadre (6") du convoyeur (4, 4') auquel ledit élément de support (7) est solidarisé.

Plus précisément, aucune partie de l'élément de support (7) se situant entre les convoyeurs (4, 4'), en vue suivant la direction d'avance (A) et en vue de dessus, n'est plus haute que la surface du convoyeur (4) amont, de sorte à ne pas former un obstacle au flux de récolte évitant ainsi la formation de paquets. Combiné au fait que la surface de dépôt (7') est majoritairement statique par rapport au cadre (6") du convoyeur (4, 4') auquel l'élément de support (7) est solidarisé, cette caractéristique permet d'éviter ou de réduire les turbulences dans le flux de récolte. Il en résulte moins de perte de récolte, ainsi qu'un andain plus homogène et un séchage plus uniforme, aboutissant à une meilleure qualité de fourrage.

Ainsi, l'élément (7) est intégré constructivement à l'un des convoyeurs et ne nécessite pas de moyen de support/fixation additionnel spécifique, ni de solidarisation particulière au châssis.

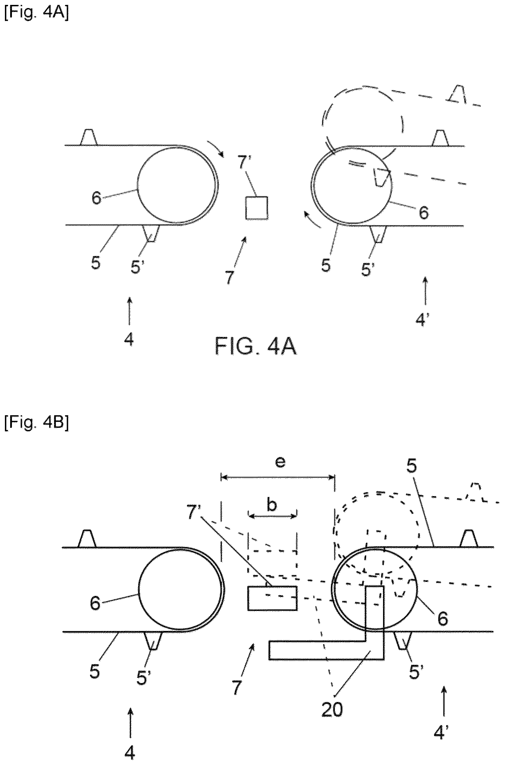

Selon une variante de réalisation préférée, ressortant des figures 1B et 4, la surface de dépôt (7') est sensiblement centrée entre le haut et le bas du rouleau (6) interne du convoyeur (4, 4') auquel l'élément de support (7) est solidarisé. Cela revient à dire que la surface de dépôt (7') est arrangée selon un plan sensiblement médian entre les plans supérieur et inférieur de la bande sans fin (5) du convoyeur (4, 4') auquel l'élément de support (7) est solidarisé.

Avec un tel arrangement on peut réduire au minimum l'écart entre la surface de dépôt (7') et les pâles ou éléments saillants (5') des bandes sans fin (5) des convoyeurs (4, 4'), sans qu'il y ait de perturbation du flux de récolte lors du passage entre les deux convoyeurs (4, 4'). Ces éléments saillants (5') se présentent par exemple sous la forme de nervures proéminentes rapportées (traverses par exemple) ou moulées au niveau de la surface porteuse de la bande sans fin (5), ou encore de crans. Les éléments saillants (5') sont destinés à assurer un meilleur entraînement de la récolte (R) dans la direction de transport du convoyeur (4, 4') concerné. En outre, la surface de dépôt (7') est de préférence sensiblement centrée entre le rouleau (6) interne du convoyeur (4) amont et le rouleau (6) interne du convoyeur (4') aval, en position adjacente.

En accord avec une variante constructive optimisée, la surface de dépôt (7') se présente sous la forme de la surface d'un quadrilatère rectangle. De préférence, la surface de dépôt (7') présente une longueur (L) égale ou supérieure à la largeur des bandes sans fin (5) des convoyeurs (4, 4'), limitant les pertes de récolte (R) sur toute la largeur des convoyeurs (4, 4'), c'est-à-dire toute la longueur de l'intervalle entre eux, ainsi que représenté sur la figure 1A. La surface de dépôt (7') s'étend au moins entre les extrémités avant et arrière de la bande sans fin (5) du convoyeur (4, 4') auquel est solidarisé l'élément de support (7).

Conformément à une évolution avantageuse possible, ressortant à titre d'exemple de la figure 4D, il peut être prévu que la surface de dépôt (7') se prolonge latéralement au moins d'un côté, jusqu'à venir en contact avec la bande sans fin (5). Préférentiellement, la surface de dépôt (7') se prolonge latéralement jusqu'à venir en contact avec des éléments saillants (5') de la bande sans fin (5). Le ou chaque prolongement latéral de la surface de dépôt (7') peut être réalisé par exemple sous la forme d'une extension souple (8) de l'élément de support (7), telle qu'une aile latérale flexible ou une brosse allongée. On notera que dans ce cas, la largeur (b) de la surface de dépôt (7') est sensiblement égale à la distance d'écartement (e).

Ainsi, la dimension transversale de la surface de dépôt (7') -dans la direction du flux de récolte entre les deux convoyeurs- est augmentée, fournissant une meilleure continuité de support sans entraver le mouvement des bandes sans fin (5), et avec un frottement minimal.

La surface de dépôt (7') présente typiquement une forme plane plate. Ainsi que représenté sur la figure 4C, elle peut également présenter une forme concave incurvée vers le bas, de préférence une forme profilée incurvée vers le bas dans un plan perpendiculaire à la direction longitudinale de l'élément de support, permettant un meilleur support de la récolte (R). La surface de dépôt (7') peut également être penchée en direction du convoyeur (4') aval de sorte à faciliter l'expulsion de la récolte vers le convoyeur (4).

Avantageusement, chaque convoyeur (4, 4') est monté mobile par rapport au châssis (2) de manière à pouvoir s'adapter aux irrégularités du sol. Notamment la hauteur de chaque convoyeur (4, 4') peut varier indépendamment de la hauteur de l'autre convoyeur (4, 4'). Additionnellement, ainsi que schématisé en pointillés pour le convoyeur (4') aval sur la figure 4A, l'orientation de chaque convoyeur (4, 4') vue selon la direction (A) d'avance lors de l'utilisation peut également s'adapter aux irrégularités du sol. Autrement dit, l'inclinaison de chaque convoyeur (4, 4') par rapport au châssis (2) et vue selon la direction d'avance (A) peut varier indépendamment de celle de l'autre convoyeur (4, 4').

Dans un second mode de réalisation représenté sur la figure 4B, la surface de dépôt (7') est montée déplaçable par rapport au convoyeur amont (4) auquel l'élément de support (7) est solidarisé. De plus, un moyen d'indexation (20) permet de déplacer la surface de dépôt (7') vers le haut lorsque le convoyeur aval (4') est déplacé vers le haut et qu'il domine au-dessus du convoyeur amont (4) d'une hauteur déterminée. Cette hauteur déterminée pourrait être nulle. De préférence, le moyen d'indexation (20) permet le déplacement vers le haut de la surface de dépôt (7') à partir d'une différence de hauteur entre les convoyeurs (4, 4') de quelques centimètres. Ainsi, lorsque le convoyeur aval (4') est situé plus haut que le convoyeur amont (4) et qu'il continue de monter par rapport à ce dernier, la surface de dépôt (7) accompagne le mouvement vers le haut du convoyeur aval (4') diminuant avantageusement les pertes de récolte dans plus de situations. L'élément de support (7) peut ainsi être monté dans des trous oblongs dont la dimension longitudinale de chacun est sensiblement verticale. Le moyen d'indexation (20) est de préférence solidaire du convoyeur aval (4').

La surface de dépôt (7') pourrait également être montée pivotante par rapport au convoyeur amont (4) auquel l'élément de support (7) est solidarisé suivant un axe sensiblement parallèle à l'axe du rouleau interne (6) dudit convoyeur amont (4), le moyen d'indexation (20) permettant de faire pivoter la surface de dépôt (7') vers le haut autour de cet axe lorsque le convoyeur aval (4') est déplacé vers le haut et qu'il domine au-dessus du convoyeur amont (4) d'une hauteur déterminée, un tel guidage en rotation (ou pivotement) étant plus simple à réaliser et moins sujet à coincement qu'un guidage en translation. Il va sans dire que lorsque le convoyeur aval (4') est plus bas que le convoyeur amont (4), moins de perte de fourrage se produise. En vue de conserver son emplacement permettant d'éviter au maximum les pertes de récolte, un élément de rappel relié à la surface de dépôt (7') et exerçant un effort vers le bas sur celle-ci peut être monté sur la machine (1) afin de maintenir l'élément de support (7) dans sa position basse.

Chaque convoyeur (4, 4') peut être monté mobile par rapport au châssis (2) par pivotement autour d'un axe parallèle à la direction d'avance (A). On dit dans ce cas que chaque convoyeur (4, 4') est pendulaire (mode non représenté). De préférence, chaque convoyeur (4, 4') est déplaçable horizontalement par rapport au châssis (2) grâce à au moins un quadrilatère déformable dont les quatre côtés sont orientés sensiblement horizontalement, et chaque convoyeur (4, 4') est déplaçable verticalement par rapport au châssis (2) grâce à au moins deux quadrilatères déformables dont deux côtés sont orientés sensiblement horizontalement, et les deux autres côtés sensiblement verticalement. Préférentiellement, le châssis (2) forme un côté de chacun des quadrilatères déformables. Chaque quadrilatère déformable peut en outre être doté d'un actionneur de type vérin hydraulique autorisant à la fois un suivi précis des irrégularités du sol et une commande du décalage en hauteur desdits convoyeurs (4, 4').

Dans la position adjacente, la distance d'écartement (e) est supérieure au diamètre extérieur du rouleau (6) interne du convoyeur (4, 4') auquel l'élément de support (7) est solidarisé. De plus, dans la position adjacente, la distance d'écartement (e) est inférieure au double du diamètre extérieur du rouleau (6) interne du convoyeur (4, 4') auquel l'élément de support (7) est solidarisé, permettant de minimiser la distance d'écartement (e). De préférence, la distance d'écartement (e) est également inférieure au quadruple de la largeur (b) de l'élément support (7) permettant de minimiser davantage les pertes de récolte (R) entre lesdits convoyeurs (4, 4').

De plus, au moins un convoyeur (4, 4') est déplaçable sensiblement horizontalement par rapport au châssis (2). Grâce à ce déplacement horizontal, il peut être prévu que les convoyeurs (4, 4') occupent une position éloignée lors de l'utilisation de la machine (1). On parle de dépose centrale (ou d'andain central) dans la position éloignée des convoyeurs (4, 4') du fait que la récolte est déposée entre ces derniers. Dans la position éloignée, les rouleaux (6) internes des deux convoyeurs (4, 4') concernés sont séparées par une distance d'écartement (e) maximale. Dans la position éloignée, la distance d'écartement (e) est supérieure au double du diamètre extérieur du rouleau (6) interne du convoyeur (4, 4') auquel l'élément de support (7) est solidarisé, autorisant avantageusement une largeur importante pour la dépose de la récolte (R). De préférence, dans la position éloignée des convoyeurs (4, 4'), la distance d'écartement (e) est supérieure au triple, et plus préférentiellement encore au quadruple du diamètre extérieur du rouleau (6) interne du convoyeur (4, 4') auquel l'élément de support (7) est solidarisé.

Dans le mode de réalisation représenté, chaque bande sans fin (5) dispose d'une surface de convoyage sur laquelle peut reposer la récolte (R). La surface de convoyage d'une bande sans fin (5) est de préférence sa surface supérieure. La surface d'appui (12) est la surface par laquelle la machine (1) repose sur le sol. La machine (1) peut reposer au sol notamment via des patins glissant au sol (voir figure 1C) sur la surface d'appui (12). Alternativement ou additionnellement, la surface d'appui (12) peut être la surface de contact entre le sol et des roulettes de la machine (1). Il peut être prévu que le sens de rotation des rouleaux (6, 6') d'au moins un des convoyeurs (4, 4') puisse être inversé. De préférence, la surface de convoyage des bandes sans fin (5) des convoyeurs (4, 4') adjacents est située à la même distance de la surface d'appui (12) de la machine (1) sur sol plan. Grâce à cette disposition, il n'est pas nécessaire de modifier la hauteur des convoyeurs (4, 4') l'un par rapport à l'autre lorsqu'on inverse le sens de rotation de la bande sans fin (5) d'au moins un convoyeur (4, 4').

En accord avec une solution constructive simple, légère et peu coûteuse, illustré sur les figures 2 à 4, l'élément de support (7) consiste en un tube creux de section rectangulaire ou carré et comporte, à l'une au moins de ses extrémités longitudinales, une aile de fixation (9), pour une solidarisation pérenne amovible avec l'un des convoyeurs (4, 4'). Un tube creux permet d'obtenir plus de légèreté pour l'élément de support (7) qui est ainsi plus pratique à manipuler. De plus, grâce à sa section rectangulaire ou carré, la surface de dépôt (7') est plane, permettant une bonne rétention de la récolte. La solidarisation de l'élément de support (7) avec l'un des convoyeurs (4, 4') peut par exemple se faire par vissage ou soudure. De manière à être amovible sans outil, cette solidarisation se fait cependant préférentiellement par engagement mécanique avec verrouillage par encliquetage ou goupillage. L'engagement mécanique peut être à correspondance de formes mâle et femelle, afin d'améliorer la tenue de la solidarisation, comme le système de fente et languette de la figure 2 par exemple. Ce type de solidarisation nécessite moins de pièces d'assemblage et permet un montage/démontage facile et rapide. En prévoyant un démontage aisé, et de préférence sans outil, de l'élément (7) et son rangement dans une position de non utilisation escamotée sur la machine (1), éloignée des bandes sans fin (5), et préférentiellement sur le même convoyeur (4, 4') que pour son positionnement opérationnel, cet élément (7) ne perturbera alors pas le flux convergent de récolte résultant en un andain central mieux calibré et plus homogène, et donc un séchage de la récolte plus uniforme. Par exemple, le verrouillage de l'élément (7) dans les deux positions peut être assuré par au moins une goupille (10).

De manière à éviter ou réduire l'accroche de récolte aux alentours du convoyeur (4, 4') auquel l'élément de support (7) est solidarisé, et notamment sur ses flancs, au moins une aile de fixation (9) s'étend sous le rouleau (6) interne du convoyeur (4, 4') auquel l'élément de support (7) est solidarisé.

Bien entendu, la machine (1) peut comporter plusieurs dispositifs (3) de déplacement (notamment trois dispositifs), avec chacun plusieurs convoyeurs (notamment deux convoyeurs).

En position adjacente, les sens de rotation des bandes sans fin (5) des convoyeurs amont (4) et aval (4') sont identiques (transfert de la récolte (R) sur un côté latéral de la machine (1)). Ceci ressort notamment de la figure 4A, où les sens de rotation des bandes sans fin (5) sont représentés par une flèche respective. En position éloignée, le sens de rotation des bandes sans fin (5) est contraire. Lors de l'utilisation de la machine (1) en position éloignée, la récolte (R) est déposée entre les convoyeurs (4, 4'). Lors de son avance, la machine (1) forme alors un andain central entre les deux convoyeurs (4, 4'). On note que le sens de rotation d'une bande sans fin (5) est identique à celui des rouleaux (6, 6') de la bande sans fin (5) respective.

La dépose latérale de la récolte (R) est d'ordinaire effectuée du côté droit de la machine (1) vue selon la direction d'avance (A). De préférence, le convoyeur (4) amont est situé du côté gauche de la machine (1) en regardant dans la direction d'avance (A).

L' élément de support (7) peut notamment se présenter sous la forme d'une pièce prête à être montée sur le cadre (6") d'au moins un convoyeur (4, 4') d'une machine agricole de fenaison (1) telle qu'évoquée ci-dessus, ladite machine (1) fournissant une position de montage lors de l'utilisation et une position de montage en dehors de l'utilisation, pour cet élément (7). Chaque position de montage permet le montage de l'élément de support (7) avec les mêmes pièces d'assemblage à un emplacement distinct. Ainsi, l'utilisateur ne perdra pas de temps à se demander où ranger l'élément de support (7) lorsqu'il n'est pas utilisé, tout en permettant de ne pas perdre ni ledit élément de support (7), ni les pièces d'assemblage, sans que ces derniers ne dérangent l'utilisateur. De manière pratique, l'emplacement de la position de montage en dehors de l'utilisation est à portée de main de l'emplacement de la position de montage lors de l'utilisation, de manière à ne pas devoir se déplacer pour transposer ledit élément de support (7), ni déplacer les pièces d'assemblage, accélérant et simplifiant ainsi cette transposition. De préférence, les deux emplacements de positions de montage sont espacés de moins d'un mètre.

Le procédé d'utilisation de la machine (1) agricole de fenaison comprenant un châssis (2) portant au moins un dispositif (3) de déplacement transversal d'une récolte, telle que de l'herbe fauchée par exemple, chaque dispositif (3) comportant au moins deux convoyeurs (4, 4') à bande sans fin (5) circulant sur au moins deux rouleaux (6, 6') montés dans un cadre (6"), ces convoyeurs (4, 4') étant mobiles par rapport au châssis (2) et pouvant occuper une position adjacente, dans laquelle un convoyeur (4) amont peut, lors de l'utilisation de la machine (1), transmettre la récolte au ou à un convoyeur (4') aval, et au moins une position éloignée après déplacement sensiblement horizontal d'au moins un des convoyeurs (4, 4') par rapport au châssis (2) et dans laquelle la récolte est déposée entre les rouleaux (6) internes des deux convoyeurs (4 et 4') concernés, ces derniers étant séparés par une distance d'écartement (e), la machine (1) comportant en outre au moins un élément de support (7) fournissant une surface de dépôt (7') présentant une largeur (b) inférieure à la distance d'écartement (e). Le procédé consiste à placer la surface de dépôt (7') entre les extrémités latérales internes (4") des convoyeurs amont (4) et aval (4') considérés, en vue suivant la direction d'avance (A) et en vue de dessus, au moins lorsque ces derniers sont en position adjacente, et, à éloigner la surface de dépôt (7') de l'espace entre les extrémités latérales internes (4") des convoyeurs amont (4) et aval (4') considérés, en vue suivant la direction d'avance (A) et en vue de dessus, pour l'utilisation de la machine (1) en position éloignée des convoyeurs (4, 4'). De cette manière, pour obtenir la largeur souhaitée de l'andain central en position éloignée des convoyeurs (4, 4') considérés, il n'est pas nécessaire d'éloigner davantage les convoyeurs (4, 4') l'un de l'autre.

De préférence, ledit procédé consiste à démonter l'élément de support (7) de son emplacement entre les extrémités latérales internes (4") des convoyeurs amont (4) et aval (4') considérés, en vue suivant la direction d'avance (A) et en vue de dessus, pour l'utilisation de la machine (1) en configuration éloignée des convoyeurs (4, 4'). Inversement, ledit procédé consiste à remonter l'élément de support (7) de son emplacement entre, en vue suivant la direction d'avance (A) et en vue de dessus, les extrémités latérales internes (4") des convoyeurs amont (4) et aval (4') considérés pour l'utilisation de la machine (1) en configuration adjacente des convoyeurs (4, 4'). Une telle réalisation permet d'obtenir de façon simple la largeur souhaitée des andains dans les configurations adjacente et éloignée des convoyeurs (4, 4') sans devoir augmenter la ou leur course(s) horizontales. Bien entendu, l'invention n'est pas limitée au mode de réalisation décrit et représenté aux dessins annexés, et décliné en plusieurs variantes constructives. Des modifications restent possibles, notamment du point de vue de la constitution des divers éléments ou par substitution d'équivalents techniques. Le cadre de l'invention est défini dans les revendications annexées.

## Revendications

1. Machine (1) agricole de fenaison comprenant un châssis (2) portant au moins un dispositif (3) de déplacement transversal d'une récolte, telle que de l'herbe fauchée par exemple, chaque dispositif (3) comportant au moins deux convoyeurs (4, 4') à bande sans fin (5) circulant sur au moins deux rouleaux (6, 6') montés dans un cadre (6"), ces convoyeurs (4, 4') étant mobiles par rapport au châssis (2) et pouvant occuper une position adjacente, dans laquelle un convoyeur (4) amont peut, lors de l'utilisation de la machine (1), transmettre la récolte au ou à un convoyeur (4') aval, les rouleaux (6) internes des deux convoyeurs (4 et 4') concernés étant alors séparées par une distance d'écartement (e), la machine (1) comportant en outre au moins un élément de support (7) fournissant une surface de dépôt (7'), présentant une largeur (b) inférieure à la distance d'écartement (e) et située entre les extrémités latérales internes (4") des convoyeurs amont (4) et aval (4') considérés, au moins lorsque ces derniers sont en position adjacente, **caractérisée en ce que** l'élément de support (7) est solidarisé avec le cadre (6") du convoyeur amont (4) de sorte que la surface de dépôt (7') est statique par rapport au cadre (6") du convoyeur (4, 4') auquel ledit élément de support (7) est solidarisé, et **en ce que** la surface de dépôt (7') est située entre le haut et le bas du rouleau (6) interne du convoyeur (4, 4') auquel ledit élément de support (7) est solidarisé.

2. Machine selon la revendication 1, **caractérisée en ce qu'**aucune partie de l'élément de support (7) se situant entre les convoyeurs (4, 4'), en vue suivant la direction d'avance (A), n'est plus haute que la surface du convoyeur (4) amont.

3. Machine selon la revendication 1, **caractérisée en ce que** la surface de dépôt (7') est sensiblement centrée entre le haut et le bas du rouleau (6) interne du convoyeur (4, 4') auquel l'élément de support (7) est solidarisé.

4. Machine selon l'une quelconque des revendications 1 à 3, **caractérisée en ce que** la surface de dépôt (7') présente une longueur (L) égale ou supérieure à la largeur des bandes sans fin (5) des convoyeurs (4, 4').

5. Machine selon l'une quelconque des revendications 1 à 4, **caractérisée en ce que** la surface de dépôt (7') se prolonge latéralement au moins d'un côté, jusqu'à venir en contact avec la bande sans fin (5) ou au moins avec des éléments saillants (5') de la bande sans fin (5).

6. Machine selon l'une quelconque des revendications 1 à 5, **caractérisée en ce que** la surface de dépôt (7') présente une forme concave incurvée vers le bas.

7. Machine selon l'une quelconque des revendications 1 à 6, **caractérisée en ce qu'**au moins un des convoyeurs (4, 4') est déplaçable sensiblement horizontalement par rapport au châssis (2), les convoyeurs (4, 4') pouvant ainsi occuper une position éloignée lors de l'utilisation de la machine (1).

8. Machine selon l'une quelconque des revendications 1 à 7, **caractérisée en ce que** le sens de rotation des rouleaux (6, 6') d'au moins un des convoyeurs (4, 4') peut être inversé.

9. Machine selon l'une quelconque des revendications 1 à 8, **caractérisée en ce que** l'unique élément de support (7) consiste en un tube creux de section rectangulaire ou carré et comporte, à l'une au moins de ses extrémités longitudinales, une aile de fixation (9), pour une solidarisation pérenne amovible avec l'un des convoyeurs (4, 4').

10. Machine selon l'une quelconque des revendications 1 à 9, **caractérisée en ce que** la surface de dépôt (7') est montée déplaçable par rapport au convoyeur amont (4) auquel l'élément de support (7) est solidarisé, et **en ce qu'**un moyen d'indexation (20) permet de déplacer la surface de dépôt (7') vers le haut lorsque le convoyeur aval (4') est déplacé vers le haut et qu'il domine au-dessus du convoyeur amont (4) d'une hauteur déterminée.

11. Machine selon l'une quelconque des revendications 1 à 10, **caractérisée en ce que** la solidarisation de l'élément de support (7) avec l'un des convoyeurs (4, 4') se fait par engagement mécanique de formes mâle et femelle avec verrouillage par encliquetage ou goupillage.

12. Machine selon l'une quelconque des revendications 1 à 11, **caractérisée en ce qu'**elle fournit une position de montage lors de l'utilisation et une position de montage en dehors de l'utilisation, pour l'élément de support (7), ces positions de montage étant à des emplacements distincts et permettant le montage de l'élément de support 7 avec les mêmes pièces d'assemblage.

## Patentansprüche

1. Landwirtschaftliche Heuwerbungsmaschine (1), die einen Rahmen (2) umfasst, der mindestens eine Vorrichtung (3) zur Querverschiebung eines Ernteguts, wie z. B. gemähtes Gras, trägt, wobei jede Vorrichtung (3) mindestens zwei Förderer (4, 4') mit Endlosband (5) umfasst, das über mindestens zwei Walzen (6, 6') läuft, die in einem Gestell (6") angebracht sind, wobei diese Förderer (4, 4') in Bezug auf den Rahmen (2) beweglich sind und eine benachbarte Position einnehmen können, in der ein Zuführförderer (4) beim Betrieb der Maschine (1) das Erntegut an den oder einen Abführförderer (4') weiterleiten kann, wobei die inneren Walzen (6) der beiden betreffenden Förderer (4 et 4') dann durch einen Entfernungsabstand (e) getrennt sind, wobei die Maschine (1) ferner mindestens ein Tragelement (7) aufweist, das eine Ablagefläche (7') mit einer Breite (b) bereitstellt, die kleiner als der Entfernungsabstand (e) ist und sich zwischen den inneren Seitenenden (4") der betreffenden Zuführ- (4) und Abführförderer (4') befindet, zumindest wenn diese in benachbarter Position sind, **dadurch gekennzeichnet, dass** das Tragelement (7) fest mit dem Gestell (6") des Zuführförderers (4) verbunden ist, so dass die Ablagefläche (7') in Bezug auf das Gestell (6") des Förderers (4, 4'), mit dem das Tragelement (7) fest verbunden ist, statisch ist, und dass sich die Ablagefläche (7') zwischen der Ober- und Unterseite der inneren Walze (6) des Förderers (4, 4'), mit dem das Tragelement (7) fest verbunden ist, befindet.

2. Maschine nach Anspruch 1, **dadurch gekennzeichnet, dass** kein Teil des Tragelements (7), das sich zwischen den Förderern (4, 4') befindet, gesehen in Vorschubrichtung (A), höher als die Oberfläche des Zuführförderers (4) ist.

3. Maschine nach Anspruch 1, **dadurch gekennzeichnet, dass** die Ablagefläche (7') im Wesentlichen zwischen der Ober- und Unterseite der inneren Walze (6) des Förderers (4, 4'), mit dem das Tragelement (7) fest verbunden ist, zentriert ist.

4. Maschine nach irgend einem der Ansprüche 1 bis 3, **dadurch gekennzeichnet, dass** die Ablagefläche (7') eine Länge (L) aufweist, die gleich oder größer ist als die Breite der Endlosbänder (5) der Förderer (4, 4').

5. Maschine nach irgend einem der Ansprüche 1 bis 4, **dadurch gekennzeichnet, dass** sich die Ablagefläche (7') zumindest auf einer Seite seitlich verlängert, bis sie mit dem Endlosband (5) oder zumindest mit den vorspringenden Elementen (5') des Endlosbandes (5) in Kontakt kommt.

6. Maschine nach irgend einem der Ansprüche 1 bis 5, **dadurch gekennzeichnet, dass** die Ablagefläche (7') eine nach unten gekrümmte konkave Form aufweist.

7. Maschine nach irgend einem der Ansprüche 1 bis 6, **dadurch gekennzeichnet, dass** mindestens einer der Förderer (4, 4') in Bezug auf den Rahmen (2) im Wesentlichen horizontal verschiebbar ist, wodurch die Förderer (4, 4') im Betrieb der Maschine (1) eine entfernte Position einnehmen können.

8. Maschine nach irgend einem der Ansprüche 1 bis 7, **dadurch gekennzeichnet, dass** die Drehrichtung der Walzen (6, 6') von mindestens einem der Förderer (4, 4') umgekehrt werden kann.

9. Maschine nach irgend einem der Ansprüche 1 bis 8, **dadurch gekennzeichnet, dass** das einzige Tragelement (7) aus einem Hohlrohr mit rechteckigem oder quadratischem Querschnitt besteht und an mindestens einem seiner Längsenden einen Befestigungsflügel (9) für eine lösbare dauerhafte Verbindung mit einem der Förderer (4, 4') aufweist.

10. Maschine nach irgend einem der Ansprüche 1 bis 9, **dadurch gekennzeichnet, dass** die Ablagefläche (7') in Bezug auf den Zuführförderer (4), mit dem das Tragelement (7) fest verbunden ist, verschiebbar angebracht ist und dass ein Indexierungsmittel (20) ermöglicht, die Ablagefläche (7') nach oben zu bewegen, wenn der Abführförderer (4') nach oben bewegt wird und den Zuführförderer (4) um eine bestimmte Höhe überragt.

11. Maschine nach irgend einem der Ansprüche 1 bis 10, **dadurch gekennzeichnet, dass** die feste Verbindung des Tragelements (7) mit einem der Förderer (4, 4') durch mechanischen Eingriff mit männlich- und weiblichförmigen Verbindungselementen mit Verriegelung durch Einrasten oder Stifte erfolgt.

12. Maschine nach irgend einem der Ansprüche 1 bis 11, **dadurch gekennzeichnet, dass** sie eine Montageposition während des Betriebs und eine Montageposition außerhalb des Betriebs für das Tragelement (7) bereitstellt, wobei sich diese Montagepositionen an unterschiedlichen Stellen befinden und die Montage des Tragelements (7) mit den gleichen Montageteilen ermöglichen.)

## Claims

1. Agricultural haymaking machine (1) comprising a chassis (2) carrying at least one transverse displacement device (3) for a crop, such as mown grass, for example, each device (3) comprising at least two conveyors (4, 4') with an endless belt (5) running over at least two rollers (6, 6') mounted in a frame (6"), these conveyors (4, 4') being movable relative to the chassis (2) and able to occupy an adjacent position, in which an infeed conveyor (4) can, when using the machine (1), transfer the crop to the or an outfeed conveyor (4'), the internal rollers (6) of the two concerned conveyors (4 and 4') then being separated by a spacing distance (e), the machine (1) further comprising at least one support element (7) providing a deposit surface (7'), having a width (b) less than the spacing distance (e) and located between the inner lateral ends (4") of the infeed (4) and outfeed (4') conveyors concerned, at least when the latter are in an adjacent position, **characterized in that** the support element (7) is rigidly fastened to the frame (6") of the infeed conveyor (4) so that the deposit surface (7') is static with respect to the frame (6") of the conveyor (4, 4') to which the said support element (7) is rigidly fastened and **in that** the deposit surface (7') is located between the top and bottom of the internal roller (6) of the conveyor (4, 4') to which the said support element (7) is rigidly fastened.

2. Machine according to claim 1, **characterized in that** no part of the support element (7) located between the conveyors (4, 4'), as seen in the direction of advance (A), is higher than the surface of the infeed conveyor (4).

3. Machine according to claim 1, **characterized in that** the deposit surface (7') is substantially centered between the top and bottom of the internal roller (6) of the conveyor (4, 4') to which the support element (7) is rigidly fastened.

4. Machine according to any one of claims 1 to 3, **characterized in that** the deposit surface (7') has a length (L) equal to or greater than the width of the endless belts (5) of the conveyors (4, 4').

5. Machine according to any one of claims 1 to 4, **characterized in that** the deposit surface (7') extends laterally on at least one side, until it comes into contact with the endless belt (5) or at least with protruding elements (5') of the endless belt (5).

6. Machine according to any one of claims 1 to 5, **characterized in that** the deposit surface (7') has a concave shape curved downwards.

7. Machine according to any one of claims 1 to 6, **characterized in that** at least one of the conveyors (4, 4') is movable substantially horizontally relative to the chassis (2), the conveyors (4, 4') thus being able to occupy a distant position when using the machine (1).

8. Machine according to any one of claims 1 to 7, **characterized in that** the direction of rotation of the rollers (6, 6') of at least one of the conveyors (4, 4') can be reversed.

9. Machine according to any one of claims 1 to 8, **characterized in that** the single support element (7) consists of a hollow tube with a rectangular or square cross-section and comprises a fixing flange (9) at at least one of its longitudinal ends, for permanent, removable rigid fastening to one of the conveyors (4, 4').

10. Machine according to any one of claims 1 to 9, **characterized in that** the deposit surface (7') is mounted so as to be movable relative to the infeed conveyor (4) to which the support element (7) is rigidly fastened and **in that** an indexing means (20) enables the deposit surface (7') to be moved upward when the outfeed conveyor (4') is moved upward and rises above the infeed conveyor (4) by a fixed height.

11. Machine according to any one of claims 1 to 10, **characterized in that** the support element (7) is attached to one of the conveyors (4, 4') by mechanical engagement of male and female shapes with locking by clickering or pinning.

12. Machine according to any one of claims 1 to 11, **characterized in that** it provides a mounting position for use and a mounting position when not in use, for the support element (7), these mounting positions being at separate locations and enabling the support element (7) to be mounted with the same assembly parts.
